# EUROPEAN PATENT SPECIFICATION

(11) **EP 0 813 202 B1**
(45) Date of publication and mention of the grant of the patent: **13.10.2004**
(21) Application number: 97303854.0
(22) Date of filing: 04.06.1997
(51) Int. Cl.: G11B 33/04, G11B 23/023

(54) **Storage box adapted to be assembled easily for storing substantially flat articles therein**
Leicht zusammensetzbarer Behälter für wesentlich flache Gegenstände
Boîtier de stockage à assemblage facile pour stocker des articles substantiellement plats

(30) Priority: 10.06.1996 US 661113
(43) Date of publication of application: 17.12.1997
(73) Proprietor: Yu, Jackson, Taipei City (TW)
(72) Inventor: Yu, Jackson, Taipei City (TW)
(74) Representative: Skone James, Robert Edmund

(56) References cited:
- EP-A- 0 160 605
- DE-U- 29 514 901
- DE-U- 29 614 562
- US-A- 4 650 072
- US-A- 4 753 343
- US-A- 5 320 244

## Description

The invention relates to a storage box, more particularly to a storage box for storing substantially flat articles, like compact discs, therein.

A conventional storage box for storing substantially flat articles includes a rectangular outer casing, a rectangular inner casing, and a rectangular frame unit. The outer casing is formed with a frontward extension. The inner casing is disposed inside the outer casing and includes a vertical rear wall, a horizontal upper wall, a horizontal bottom wall, two opposite vertical side walls, and a partition wall formed between the side walls so as to define two compartments on two sides of the partition wall. Each of the side walls and the partition wall is formed with a plurality of ribs which define a plurality of flat article receiving slots in each of the compartments accessible from the front portion thereof. The side walls cooperatively define an inverted L-shaped door sliding groove for accommodation of a vertically movable flexible door panel therein. The frame unit has a peripheral groove press fitted by the frontward extension of the outer casing such that the frame unit prevents disengagement of the inner casing from the outer casing.

Note that the conventional storage box includes several parts and therefore requires several steps to assemble the same. For example, the inner casing needs to be assembled before being disposed in the outer casing. During assembly, if the side walls and the partition wall of the inner casing are not carefully arranged and precisely measured, misalignment of the ribs between the side walls and the partition wall may occur, thereby resulting in the formation of inclined receiving slots. one such storage box is described in US-A-5320244, which document is used for the delimitation of claim 1.

The object of this invention is to provide a storage box which includes a relatively small number of components so as to facilitate assembly thereof.

Another object of this invention is to provide a storage box which has flat article receiving slots that are defined by a plurality of aligned ribs.

In accordance with the invention we provide a storage box for storing substantially flat articles, comprising
a casing including a pair of first upright lateral panels each having an inner surface and an outer surface, and a substantially flat bottom wall transversely interposed between the first upright lateral panels to define a front open chamber;
a one-piece plastic frame unit including a pair of second upright lateral panels each having an inner surface and an outer surface; a plurality of first parallel ribs transversely formed on each of the second upright lateral panels so as to define a plurality of flat article receiving slots in the chamber; characterised in that the outer surfaces of said second upright lateral panels define between them a width slightly larger than the width between the inner surfaces of said first upright lateral panels so as to be press fitted in said chamber;
a flange portion disposed on a front edge of each of the second upright lateral panels for abutting against a front edge of each of the first upright lateral panels so as to prevent further movement of the frame unit into the chamber when press fitted;
wherein the length of each of the second upright lateral panels as well as the length of each of the first parallel ribs is shorter than one half of the length of each of the first upright lateral panels, all lengths being measured in a transverse direction extending into the chamber.

Because the frame unit is separately formed and can be press fitted to the chamber attachment of the frame unit is thus facilitated.

Other features and advantages of this invention will become more apparent in the following detailed description of the preferred embodiment with reference to the accompanying drawings, in which:
Figure 1 is schematic view of a storage box of this invention;
Figure 2 is an exploded view of the preferred embodiment; and
Figure 3 is a perspective view of a modified storage box of this invention.

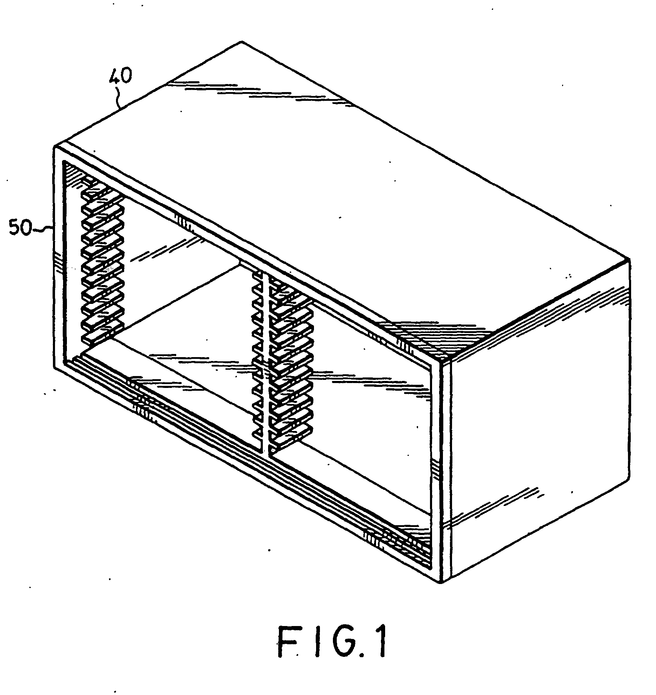

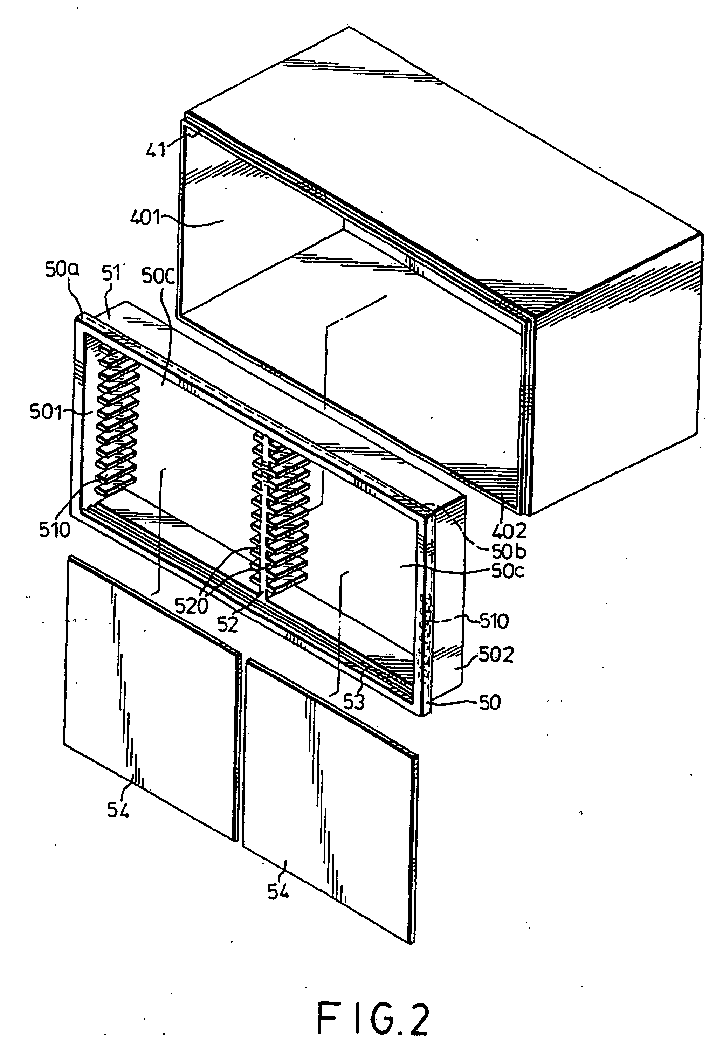

Referring to Figures 1 and 2, the preferred embodiment of a storage box for storing substantially flat articles is shown to include rectangular casing 40, a one-piece rectangular frame unit 50, and two slide doors 54.

As illustrated, the casing 40 includes a pair of first upright lateral panels each of which defines an inner surface 401 and an outer surface, and a substantially flat bottom wall 402 transversely interposed between the inner surfaces 401 of the first upright lateral panels to define cooperatively a front open chamber. An engagement extension 41 projects frontwardly from the front edge of each of the first upright lateral panels.

The frame unit 50 includes a pair of second upright lateral panels each of which has an inner surface 501, an outer surface 502 and thus defines a width slightly larger than that of the first upright lateral panels so that the rear section 51 of the frame unit 50 can be press fitted into the chamber of the casing 40. A flange portion 50a is formed on a front edge of the second upright lateral panels and has a rearward engaging groove 50b press fitted by the engagement extension 41 of the casing 40. Thus, the flange portion 50a abuts against the front edge of the first upright lateral panels of the casing 40 to prevent further movement cf the frame unit 50 during the press fit operation. A plurality of first parallel ribs 510 are transversely formed on each of the inner surfaces 501 of the second upright lateral panels so as to define a plurality of flat article receiving slots in the chamber. The frame unit 50 also includes an upright partition plate 52 disposed between the second upright lateral panels to divide the frame unit 50 into two portions 50c. A plurality of second parallel ribs 520 are transversely formed on two opposite sides of the partition plate 52 to define a plurality of flat article receiving slots which are located on two sides of the partition plate 52.

The frame unit 50 has two pairs of longitudinal grooves 53 respectively formed in front portions thereof between the inner surfaces 501 of the second upright lateral panels to slidably receive the slide doors 54 so as to close and open the chamber.

Note that the lengths of each of the second upright lateral panels, as well as each of the first and second parallel ribs 510, 520, are shorter than one half of a length in a transverse direction of each of the first upright lateral panels.

The frame unit 50 can be separately formed, such as by means of an extrusion machine, and can be easily attached to the casing 40 by mere pressing. Misalignment of the ribs 510, 520 on the second upright lateral panels and the partition plate 52 does not occur.

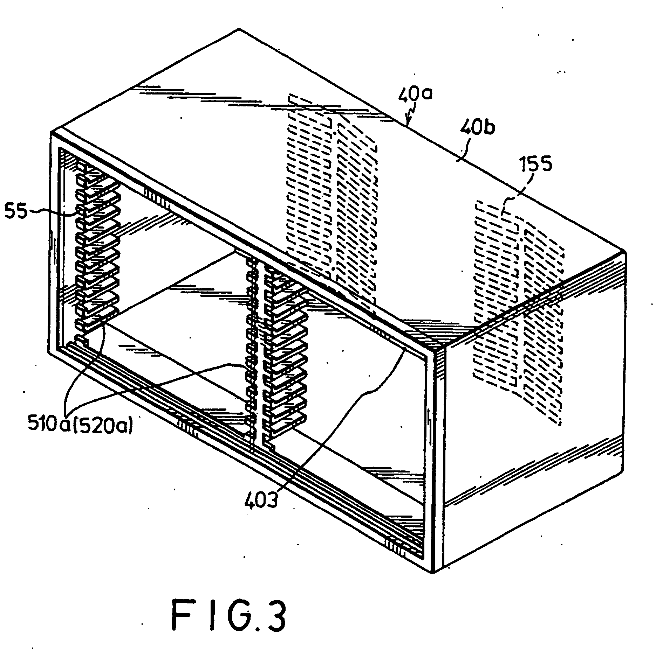

Referring to Figure 3, a modified preferred embodiment is shown and has a structure generally similar to that of the previous embodiment except that each of the ribs 510a, 520a in the modified preferred embodiment is provided with an upwardly extending element 55 at a front end thereof. The rear wall 40b of the casing 40a is provided with a plurality of resilient studs 155 which correspond to the slots so as to cushion an inserted flat article in order to prevent damage to a rear side of the flat article when the article is inserted into the receiving slot.

## Claims

1. A storage box for storing substantially flat articles, comprising
a casing (40) including a pair of first upright lateral panels each having an inner surface (401) and an outer surface, and a substantially flat bottom wall (402) transversely interposed between the first upright lateral panels to define a front open chamber;
a one-piece plastic frame unit (50) including a pair of second upright lateral panels each having an inner surface (501) and an outer surface (502); a plurality of first parallel ribs (510) transversely formed on each of the second upright lateral panels so as to define a plurality of flat article receiving slots in the chamber; **characterised in that** the outer surfaces (502) of said second upright lateral panels define between them a width slightly larger than the width between the inner surfaces (401) of said first upright lateral panels so as to be press fitted in said chamber;
a flange portion (50a) disposed on a front edge of each of the second upright lateral panels for abutting against a front edge of each of the first upright lateral panels so as to prevent further movement of the frame unit (50) into the chamber when press fitted;
wherein the length of each of the second upright lateral panels as well as the length of each of the first parallel ribs (510) is shorter than one half of the length of each of the first upright lateral panels, all lengths being measured in a transverse direction extending into the chamber.

2. The storage box according to Claim 1, **characterized in that** the flange portion (50a) of the frame unit (50) is formed with a rearward engaging groove (50b), the casing (40) including an engagement extension (41) which projects frontwardly from the front edge of each of the first upright lateral panels so as to be engaged within the engaging groove (50b).

3. The storage box according to Claim 2, **characterized in that** the frame unit (50) includes an upright partition plate (52) disposed between the second upright lateral panels to divide the frame (50) unit into two portions (50c), and a plurality of second parallel ribs (520) transversely formed on each of two opposite sides of the partition plate (52), the plurality of second parallel ribs (520) on each side of the partition plate defining a plurality of flat article receiving slots.

4. The storage box according to Claim 3, further **characterized by** two slide doors (54), wherein the frame unit (50) has two pairs of longitudinal grooves respectively formed in front portions thereof between the second inner surfaces (501) to slidably receive the two slide doors so as to close and open the chamber selectively.

5. The storage box according to claim 4, **characterized in that** the casing (40a) further has a plurality of resilient studs (155) disposed on a rear wall (40b) thereof and generally corresponding to the slots so as to cushion a read side of the flat article.

## Patentansprüche

1. Lagerbehälter zur Lagerung von im wesentlich flachen Gegenständen, mit
einem Gehäuse (40) mit zwei ersten aufrecht stehenden Seitenplatten mit jeweils einer Innenseite (401) und einer Außenseite und mit einer im wesentlichen flachen Bodenwand (402), die in Querrichtung zwischen den ersten aufrecht stehenden Seitenplatten angeordnet ist, um eine vom offene Kammer zu bilden;
einer einstückigen Rahmeneinheit (50) aus Kunststoff mit zwei zweiten aufrecht stehenden Seitenplatten mit jeweils einer Innenseite (501) und einer Außenseite (502); einer Mehrzahl von ersten parallelen Rippen (510), die in Querrichtung an jeder der zweiten aufrecht stehenden Seitenplatten ausgebildet sind, um somit eine Mehrzahl von flachen, Gegenstände aufnehmenden Schlitzen in der Kammer zu bilden; **dadurch gekennzeichnet, daß** die Außenseiten (502) der zweiten aufrecht stehenden Seitenplatten zwischen sich eine Breite bilden, die etwas größer als die Breite zwischen den Innenseiten (401) der ersten aufrecht stehenden Seitenplatten ist, so daß diese in die Kammer preßgepaßt werden;
einem Flanschabschnitt (50a), der an einer Vorderkante von jeder der zweiten aufrecht stehenden Seitenplatten angeordnet ist, um gegen eine Vorderkante von jeder der ersten aufrecht stehenden Seitenplatten zu stoßen, um somit bei Preßpassung eine weitere Bewegung der Rahmeneinheit (50) in die Kammer zu verhindern;
wobei die Länge von jeder der zweiten aufrecht stehenden Seitenplatten sowie die Länge von jeder der ersten parallelen Rippen (510) kürzer als eine Hälfte der Länge von jeder der ersten aufrecht stehenden Seitenplatten ist,
wobei alle Längen in einer sich in die Kammer erstreckenden Querrichtung gemessen werden.

2. Lagerbehälter nach Anspruch 1, **dadurch gekennzeichnet, daß** der Flanschabschnitt (50a) der Rahmeneinheit (50) mit einer nach hinten gerichteten Eingriffsnut (50b) ausgebildet ist, wobei das Gehäuse (40) einen Eingriffsvorsprung (41) enthält, der von der Vorderkante von jeder der ersten aufrecht stehenden Seitenplatten nach vom vorsteht, um somit innerhalb der Eingriffsnut (50b) in Eingriff zu kommen.

3. Lagerbehälter nach Anspruch 2, **dadurch gekennzeichnet, daß** die Rahmeneinheit (50) eine aufrecht stehende Trennplatte (52), die zwischen den zweiten aufrecht stehenden Seitenplatten angeordnet ist, um die Rahmeneinheit (50) in zwei Abschnitte (50c) zu teilen, und eine Mehrzahl von zweiten parallelen Rippen (520) umfaßt, die in Querrichtung auf jeder von zwei einander gegenüberliegenden Seiten der Trennplatte (52) ausgebildet sind, wobei die Mehrzahl von zweiten parallelen Rippen (520) auf jeder Seite der Trennplatte eine Mehrzahl von flachen, Gegenstände aufnehmenden Schlitzen bildet.

4. Lagerbehälter nach Anspruch 3, des weiteren **gekennzeichnet durch** zwei Schiebetüren (54), wobei die Rahmeneinheit (50) zwei Paare von Längsnuten aufweist, die jeweils in vorderen Abschnitten derselben zwischen den zweiten Innenseiten (501) ausgebildet sind, um die zwei Schiebetüren verschieblich aufzunehmen, um somit die Kammer wahlweise zu schließen und zu öffnen.

5. Lagerbehälter nach Anspruch 4, **dadurch gekennzeichnet, daß** das Gehäuse (40a) des weiteren eine Mehrzahl von elastischen Zapfen (155) aufweist, die an einer Rückwand (40b) derselben angeordnet sind und im wesentlichen den Schlitzen entsprechen, um somit eine Rückseite des flachen Gegenstands abzufedern.

## Revendications

1. Boîte de stockage pouvant stocker des articles sensiblement plats, comprenant :
un boîtier (40) comprenant une paire de premiers panneaux latéraux verticaux présentant chacun une surface intérieure (401) et une surface extérieure, et une paroi inférieure sensiblement plane (402) interposée transversalement entre les premiers panneaux latéraux verticaux afin de définir un compartiment ouvert sur l'avant ;
une unité formant cadre en plastique monobloc (50) comprenant une paire de deuxièmes panneaux latéraux verticaux présentant chacun une surface intérieure (501) et une surface extérieure (502) ; plusieurs premières nervures parallèles (510) formées transversalement sur chacun des deuxièmes panneaux latéraux verticaux de façon à définir plusieurs gorges de réception d'article plat dans le compartiment ; **caractérisée en ce que** lés surfaces extérieures (502) desdits deuxièmes panneaux latéraux verticaux définissent entre elles une largeur légèrement supérieure à la largeur entre les surfaces intérieures (401) desdits premiers panneaux latéraux verticaux de façon à être emboîtées avec un ajustement serré dans ledit compartiment ;
une partie à rebord (50a) disposée sur le bord avant de chacun des deuxièmes panneaux latéraux verticaux pour buter contre un bord avant de chacun des premiers panneaux latéraux verticaux de façon à empêcher tout déplacement supplémentaire de l'unité formant cadre (50) dans le compartiment lorsqu'elle est emboîtée avec un ajustement serré ;
dans laquelle la longueur de chacun des deuxièmes panneaux latéraux verticaux ainsi que la longueur de chacune des premières nervures parallèles (510) sont plus courtes que la moitié de la longueur de chacun des premiers panneaux latéraux verticaux, toutes les longueurs étant mesurées dans une direction transversale s'étendant dans le compartiment.

2. Boîte de stockage selon la revendication 1, **caractérisée en ce que** la partie à rebord (50a) de l'unité formant cadre (50) comprend une rainure d'accrochage arrière (50b), le boîtier (40) comprenant une extension d'accrochage (41) qui fait saillie vers l'avant depuis le bord avant de chacun des premiers panneaux latéraux verticaux de façon à s'insérer dans la rainure d'accrochage (50b).

3. Boite de stockage selon la revendication 2, **caractérisée en ce que** l'unité formant cadre (50) comprend une plaque de séparation verticale (52) disposée entre les deuxièmes panneaux latéraux verticaux afin de diviser l'unité formant cadre (50) en deux parties (50c), et plusieurs deuxièmes nervures parallèles (520) formées transversalement sur chacun des deux côtés opposés de la plaque de séparation (52), les plusieurs deuxièmes nervures parallèles (520) de chaque côté de la plaque de séparation définissant plusieurs gorges de réception d'article plat.

4. Boîte de stockage selon la revendication 3, **caractérisée en outre par** deux portes coulissantes (54), dans laquelle l'unité formant cadre (50) comporte deux paires de rainures longitudinales formées respectivement dans ses parties avant entre les deuxièmes surfaces intérieures (501) pour recevoir de façon coulissante les deux portes coulissantes afin de fermer et d'ouvrir sélectivement le compartiment.

5. Boîte de stockage selon la revendication 4, **caractérisée en ce que** le boîtier (40a) comporte en outre plusieurs crampons élastiques (155) disposés sur sa paroi arrière (40b) et correspondant globalement aux gorges de façon à amortir un côté arrière de l'article plat.
